(19) Europäisches Patentamt
European Patent Office
Office européen des brevets

(11) **EP 2 303 968 B1**

(12) **EUROPÄISCHE PATENTSCHRIFT**

(45) Veröffentlichungstag und Bekanntmachung des Hinweises auf die Patenterteilung:
**24.09.2014 Patentblatt 2014/39**

(21) Anmeldenummer: **09768998.8**

(22) Anmeldetag: **25.06.2009**

(51) Int Cl.:
*C09C 1/00* (2006.01)      *C09C 1/64* (2006.01)

(86) Internationale Anmeldenummer:
**PCT/EP2009/004582**

(87) Internationale Veröffentlichungsnummer:
**WO 2009/156149 (30.12.2009 Gazette 2009/53)**

(54) **PIGMENTMISCHUNG VON PVD-ALUMINIUMEFFEKTPIGMENTEN UND DÜNNEN ALUMINIUMEFFEKTPIGMENTEN AUS VERMAHLUNG, VERFAHREN ZU DEREN HERSTELLUNG SOWIE DEREN VERWENDUNG**

PIGMENT MIXTURE OF PVD ALUMINIUM EFFECT PIGMENTS AND THIN ALUMINIUM EFFECT PIGMENTS FROM MILLING, PROCESS FOR PREPARATION THEREOF AND USE THEREOF

MÉLANGE PIGMENTAIRE DE PIGMENTS D'ALUMINIUM PVD À EFFET, ET PIGMENTS D'ALUMINIUM MINCES À EFFET OBTENUS PAR BROYAGE, PROCÉDÉ POUR LEUR FABRICATION, ET LEUR UTILISATION

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **25.06.2008 DE 102008029821**

(43) Veröffentlichungstag der Anmeldung:
**06.04.2011 Patentblatt 2011/14**

(73) Patentinhaber: **Eckart GmbH**
**91235 Hartenstein (DE)**

(72) Erfinder:
• **WAGNER, Diana**
**91217 Hersbruck (DE)**
• **RUMMER, Christian**
**90459 Nürnberg (DE)**
• **MAUL, Robert**
**90610 Winkelhaid (DE)**
• **GREIWE, Klaus**
**91207 Lauf (DE)**

(74) Vertreter: **Louis Pöhlau Lohrentz**
**Patentanwälte**
**Postfach 30 55**
**90014 Nürnberg (DE)**

(56) Entgegenhaltungen:
**WO-A-2004/087816      WO-A-2005/111152**
**US-A1- 2004 146 642**

**Beschreibung**

Die Erfindung betrifft eine Mischung von Aluminiumeffektpigmenten, ein Verfahren zu deren Herstellung als auch deren Verwendung.

Aluminiumeffektpigmente, die durch PVD-Verfahren (PVD: physical vapour deposition (engl.); physikalische Dampfabscheidung (deutsch)) hergestellt werden, sind seit ungefähr 20 Jahren kommerziell erhältlich. Sie stellen die optisch hochwertigsten Aluminiumeffektpigmente dar. Diese Pigmente weisen mittlere Dicken unter 60 nm und relativ enge Dickenverteilungen auf. Ihre Oberflächen sind aufgrund ihrer Herstellungsweise sehr glatt und gleichmäßig.

Kommerziell erhältliche Produkte sind beispielsweise Metalure® (Fa. Avery, Vertrieb Fa. Eckart), Metasheen® (Fa. Ciba Specialities), Decomet® (Fa. Schlenk) oder Starbrite® (Fa. Silberline).

Fertige Druckfarben, enthaltend PVD-Aluminiumpigmente, werden von der Fa. Eckart unter dem Handelsnamen Ultra Star® angeboten.

Die PVD-Pigmente werden aufgrund ihrer starken Neigung zur Agglomeration als verdünnte Dispersionen in organischen Lösemitteln mit einem Pigmentgehalt von nur 5 bis maximal 20 Gew.-% im Handel angeboten. Mithin weisen diese Angebotsformen einen sehr hohen Anteil an organischen Lösemitteln auf. Dies ist hinsichtlich der weltweiten Bemühungen um eine VOC-Reduzierung ein deutlicher Nachteil dieser Pigmente.

Weiterhin weisen PVD-Pigmente relativ hohe Schwankungsbreiten hinsichtlich ihrer optischen Eigenschaften im Anwendungsmedium auf. Dies ist zum einen in der komplizierten Herstellungstechnologie begründet. Zudem mögen optisch sehr hochwertige Pigmente auch entsprechend anfällig für Schwankungen sein.

Die US 2003/0178734 A1 beschreibt ein verbessertes Herstellungsverfahren zur Herstellung von PVD-Aluminiumpigmenten.

Durch PVD-Verfahren hergestellte Aluminiumpigmente sind diejenigen mit den optisch anspruchsvollsten Eigenschaften. In den letzten Jahren ist es jedoch gelungen, Aluminiumeffektpigmente durch Naßvermahlung von Aluminiumgrieß herzustellen, die nahezu die geringe Dicke der PVD-Pigmente erreichen.

Aus der EP 1 621 586 A1 sind Aluminiumeffektpigmente mit Größen $d_{50}$ von 8 μm bis 30 μm sowie mittleren Dicken von 25 bis 80 nm bekannt, die durch Naßvermahlung hergestellt wurden.

Aus der WO 2004/087816 A2 sind ebenfalls sehr dünne Aluminiumeffektpigmente bekannt, die durch Vermahlung hergestellt werden. Diese Aluminiumeffektpigmente weisen einen Span der Dickenverteilung von 70 bis 140 % auf. In ihren optischen Eigenschaften stehen diese Pigmente zwischen den PVD-Pigmenten und den sogenannten "Silberdollar"-Pigmenten. Bei diesen "Silberdollar"-Pigmenten handelt es sich um herkömmliche durch Vermahlung erhaltene Aluminiumeffektpigmente mit wesentlich größeren Dicken, die meist im Bereich von etwa 150 nm bis etwa 500 nm liegen.

Weiterhin sind aus der WO 2005/118722 A1 dünne, durch Vermahlung hergestellte Aluminiumpigmente bekannt, die mit einer anorganischen Korrosionsschutzschicht versehen sind.

Die WO 2005/111152 A1 offenbart eine Mischung aus Effektpigment und Aluminiummetallpigment mit spiegelähnlichen Eigenschaften. Die WO 2004/087816 A2 offenbart durch Vermahlung von Aluminiumpartikeln erhaltene Aluminiumpigmente.

Aufgabe der vorliegenden Erfindung ist es, Aluminiumeffektpigmente bereit zu stellen, die ähnliche hochwertige Eigenschaften wie PVD-Pigmente haben, jedoch einen geringeren Lösemittelgehalt aufweisen und eine konstantere Verarbeitungsqualität gewährleisten.

Weiterhin ist es Aufgabe der Erfindung, ein Verfahren zur Herstellung der erfindungsgemäßen Aluminiumeffektpigmente zu finden.

Die Aufgabe wurde gelöst durch Bereitstellung einer Mischung von Aluminiumeffektpigmenten, die

a) PVD-Aluminiumeffektpigmente (PVD-Al), die bei einer über Dickenauszählung mit Rasterelektronenmikroskopie (REM) ermittelten Dickenverteilung in der Darstellung als Summenhäufigkeitsverteilung einen $h_{50,PVD}$-Wert aus einem Bereich von 10 nm bis 70 nm aufweisen
b) Aluminiumeffektpigmente (konv.-Al), die durch Vermahlungsverfahren hergestellt sind und bei einer über Dickenauszählung mit Rasterelektronenmikroskopie (REM) ermittelten Dickenverteilung in der Darstellung als Summenhäufigkeitsverteilung einen $h_{50,konv}$-Wert aus einem Bereich von 15 nm bis 100 nm aufweisen,
c) Lösemittel oder Lösemittelgemisch
umfasst,
mit der Maßgabe, dass das Gewichtsverhältnis von PVD-Al zu konv.-Al 99 : 1 bis 1 : 99 ist und der Gehalt an Lösemittel mindestens 30 Gew.-%, bezogen auf das Gesamtgewicht der Mischung, beträgt.

Die der Erfindung zugrunde liegende Aufgabe wird des weiteren durch Bereitstellung eines Verfahrens zur Herstellung der erfindungsgemäßen Mischung von Aluminiumeffektpigmenten gelöst, wobei das Verfahren den folgenden Schritt umfaßt:

Vermischen von PVD-Aluminiumeffektpigmenten (PVD-Al) und

Aluminiumeffektpigmenten, die durch Vermahlung hergestellt sind (konv.-Al), in Gegenwart von Lösemittel oder einem Lösemittelgemisch.

Die Aufgabe der Erfindung wird des weiteren durch die Verwendung der erfindungsgemäßen Mischung von Aluminiumeffektpigmenten in Coatings, Lacken, Druckfarben, Kunststoffen oder kosmetischen Formulierungen sowie durch die Bereitstellung einer Beschichtungszusammensetzung, die eine Mischung von Aluminiumeffektpigmenten nach einem der Ansprüche 1 bis 11 enthält und durch einen beschichteten Gegenstand, der eine Beschichtungszusammensetzung nach Anspruch 14 oder eine Mischung von Aluminiumeffektpigmenten nach einem der Ansprüche 1 bis 11 aufweist oder enthält, gelöst.

Bevorzugte Weiterbildungen der Erfindung sind in den jeweiligen Unteransprüchen angegeben.

Mit der Abkürzung "PVD-Al" werden vorliegend Aluminiumeffektpigmente bezeichnet, die durch PVD (engl.: Physical vapour deposition) hergestellt sind.

Mit der Abkürzung "konv.-Al" werden vorliegend Aluminiumeffektpigmente bezeichnet, die durch Vermahlungsverfahren hergestellt sind.

PVD-Aluminiumeffektpigmente weisen eine nahezu absolut planare Oberfläche auf. Herstellungsbedingt weisen die PVD-Aluminiumeffektpigmente relativ gerade Bruchkanten entlang des äußeren Pigmentumfanges auf. Bei der Herstellung von PVD-Aluminiumpigmenten wird Aluminium in der Regel auf ein Trägerband aufgedampft und nachfolgend abgelöst. Während der Ablösung zerbricht der Aluminiumfilm in kleinere Bruchstücke, die nachfolgend weiter zerkleinert werden können. Bei der Ablösung sowie der optionalen weiteren Zerkleinerung entstehen die relativ geraden Bruchkanten.

Die durch Verformungsvermahlung hergestellten Aluminiumpigmente (konv.-Al) weisen im Unterschied zu PVD-Pigmenten einen irregulär geformten Randbereich auf. Der irregulär geformte Randbereich entsteht bei der Herstellung durch die mechanische Einwirkung von Mahlkörpern, üblicherweise Kugeln, auf den Aluminiumgrieß, der das Ausgangsmaterial bei der Herstellung von Aluminiumeffektpigmenten durch Vermahlung ist. Des weiteren weisen die durch Verformungsvermahlung hergestellten Aluminiumeffektpigmente keine nahezu absolut planare Oberfläche auf. Im Unterschied zu PVD-Aluminiumpigmenten weisen die durch Vermahlung erhaltenen konv.-Al-Pigmente leichte Vertiefungen und Erhöhungen auf.

Die Unterschiede von PVD-Aluminiumeffektpigmenten und durch Vermahlung hergestellten Aluminiumpigmenten (konv.-Al) sind im REM (Rasterelektronenmikroskop) sehr gut zu erkennen.

Bei bevorzugten Ausführungsformen beträgt das Gewichtsverhältnis von PVD-Al zu konv.-Al 95 : 5 bis 5 : 95, weiter bevorzugt 90 : 10 bis 10 : 90 und besonders bevorzugt 80 : 20 bis 20 : 80. Es können aber auch selbstverständlich Mischungen verwendet werden, bei den das Gewichtsverhältnis im Bereich von 60 : 40 bis 40 : 60 liegt.

Als konventionell hergestellte Aluminiumeffektpigmente können beispielsweise die in den EP 1 621 586 A1 und der WO 2004/087816 A2 beschriebenen Aluminiumeffektpigmente verwendet werden. Diese Schriften sind hiermit unter Bezugnahme mit aufgenommen.

Im Rahmen dieser Erfindung wurde die Dickenverteilung der Metalleffektpigmente mittels Rasterelektronenmikroskopie (REM) bestimmt. Bei dieser Methode sind so viele Teilchen zu vermessen, dass eine repräsentative statistische Auswertung vorgenommen werden kann. Üblicherweise werden etwa ca. 100 Teilchen vermessen.

Die Dickenverteilung wird zweckmäßigerweise in Form einer Summenhäufigkeitsverteilung, die auch als Summenhäufigkeitskurve oder Summendurchgangskurve bezeichnet wird, dargestellt. Als Mittelwert bietet sich der $h_{50}$-Wert der Summenhäufigkeitsverteilung an. Ein Maß für den Grobanteil ist der $h_{90}$-Wert. Er besagt, dass 90 % aller Pigmentteilchen eine Dicke gleich diesem Wert und/oder unterhalb dieses Wertes besitzen. Entsprechend besagt beispielsweise ein $h_{98}$-Wert, dass 98 % aller Pigmentteilchen eine Dicke gleich diesem Wert und/oder unterhalb dieses Wertes besitzen. In analoger Weise ist der $h_{10}$-Wert ein Maß für den Feinanteil der Dickenverteilung, der besagt, dass 10 % aller Pigmentteilchen eine Dicke gleich diesem Wert und/oder unterhalb dieses Wertes besitzen.

Diese Werte können rechnerisch aus einer Liste der gemessenen Einzelwerte ermittelt werden, so z.B. mit Hilfe der "Quantil"-Funktion in einer Excel-Darstellung. Die Ermittlung der Dicken der einzelnen Pigmente mittels REM erfolgt nach der in der WO 2004/087816 A2 beschriebenen Methode.

Bei bevorzugten Ausführungsformen weisen die nach Vermahlungsverfahren hergestellten Aluminiumeffektpigmente (konv.-Al) einen $h_{50,konv}$-Wert aus einem Bereich von 20 nm bis 75 nm, weiter bevorzugt 22 nm bis 65 nm, besonders bevorzugt 23 nm bis 55 nm und ganz besonders bevorzugt von 25 nm bis 50 nm auf.

Aluminiumeffektpigmente (konv.-Al) mit einen $h_{50,konv}$-Wert aus diesen bevorzugten Bereichen sind besonders gut geeignet zur Verwendung in Druckanwendungen, bei denen sogenannte Folienkonterapplikationen erstellt werden. Hierunter versteht man eine Applikation einer mit Aluminiumeffektpigmenten pigmentierten Druckfarbe, beispielsweise einer Tief- oder Siebdruckfarbe, auf einer weitgehend transparenten Folie. Betrachtet man danach den Druck durch die Folie, so bildet sich ein metallischer Spiegel, wie er sonst mit herkömmlichen Effektpigmenten nicht erreicht werden kann. Bisher werden bei Folienkonterapplikationen immer PVD-Aluminiumeffektpigmente eingesetzt.

Insbesondere für diese Folienkonterapplikationen ist es bevorzugt, dass die Aluminiumeffektpigmente insgesamt eine Dickenverteilung in einem sehr dünnen Bereich aufweisen. Dickere Pigmente können die Orientierung stören und daher den mit extrem hohem Glanz einhergehenden Spiegeleffekt vermindern.

Bei bevorzugten Ausführungsformen weisen daher die nach Vermahlungsverfahren hergestellten Aluminiumpigmente (konv.-Al) eine über Dickenauszählung mit Rasterelektronenmikroskopie ermittelten $h_{90,konv}$-Wert aus einem Bereich von 30 nm bis 110 nm, weiter bevorzugt von 32 nm bis 100 nm, besonders bevorzugt von 33 nm bis 90 nm und besonders bevorzugt von 35 nm bis 75 nm auf.

Durch PVD-Verfahren hergestellte Aluminiumeffektpigmente weisen vorzugsweise die gleichen Dickenverteilungen auf.

Weiterhin weisen bei bevorzugten Ausführungsformen die nach Vermahlungsverfahren hergestellten Aluminiumpigmente (konv.-Al) eine über Dickenauszählung mit Rasterelektronenmikroskopie ermittelte relative Breite der Dickenverteilung Δh, welche anhand der entsprechenden Summenhäufigkeitsverteilung der relativen Häufigkeiten nach der Formel

$$\Delta h = 100 \times \frac{h_{90} - h_{10}}{h_{50}}$$

berechnet wird, von 20 % bis 140 %, auf.

Bei besonders bevorzugten Ausführungsformen weisen die nach Vermahlungsverfahren hergestellten Aluminiumeffektpigmente eine relative Breite der Dickenverteilung Δh in einem Bereich von 30 % bis unter 70 % auf. Weiter bevorzugt liegt die relative Breite der Dickenverteilung Δh in einem Bereich von 35 % bis 67 %, besonders bevorzugt von 40 % bis 65 % und ganz besonders bevorzugt von 40 % bis 60 %.

Bei besonders bevorzugten Ausführungsformen weisen die Aluminiumeffektpigmente der Mischung insgesamt, d.h. von PVD-Al und konv.-Al, eine relative Breite der Dickenverteilung Δh in einem Bereich von 20 % bis unter 70 %, weiter bevorzugt von 25 % bis 67 %, besonders bevorzugt von 27 % bis 65 % und ganz besonders bevorzugt von 30 % bis 60 % auf.

Aluminiumeffektpigmente, die durch Naßvermahlung hergestellt sind und einen $h_{50,konv}$ von 15 bis 80 nm mit einem einen Dickenspan von unter 70 % aufweisen, waren bislang noch nicht zugänglich.

Bei der Herstellung dieser Aluminiumeffektpigmente wird als Ausgangsmaterial feiner Aluminiumgrieß mit enger Korngrößenverteilung verwendet.

Das Verfahren zur Herstellung der erfindungsgemäß zu verwendenden Aluminiumeffektpigmente zeichnet sich durch eine äußerst schonende Verformungsmahlung von Aluminiumgrieß aus. Im Einzelnen umfasst das Verfahren folgende Schritte:

a) Bereitstellen eines Aluminiumgrießes mit einer Korngrößenverteilung, welche vorzugsweise einen $d_{Grieß,Al,10} < 3,0\ \mu m$, einen $d_{Grieß,Al,50} < 5,0\ \mu m$ und einen $d_{Grieß,Al,90} < 8,0\ \mu m$ aufweist,

b) Vermahlen des Aluminiumgrießes aus Schritt a) unter Verwendung eines Mahlwerks in Gegenwart von Lösemittel und Schmierstoffen und Mahlkörpern, die vorzugsweise ein Einzelgewicht von 2 bis 13 mg aufweisen.

Der Aluminiumgrieß wird bevorzugt in "Atomizern" durch Verdüsung bzw. Zerstäubung von flüssigem Aluminium, vorzugsweise einer Aluminiumschmelze, hergestellt. Der Grieß umfaßt oder besteht aus Aluminiumpartikeln mit einer vorzugsweise weitgehend runden Form. Besonders bevorzugt werden Aluminiumgrieße mit Aluminiumpartikeln in einer kugelförmigen bis leicht ellipsoiden Form verwendet. Der nach Verdüsung einer Aluminiumschmelze erhaltene Aluminiumgrieß wird gemäß einer bevorzugten Variante klassiert, um die gewünschte Korngrößenverteilung, die auch als Kornband bezeichnet werden kann, zu erhalten.

Der Aluminiumgrieß ist vorzugsweise ein sehr feiner Metallgrieß mit einer sehr engen Größenverteilung. Das Kornband der Größenverteilung wird in üblicher Weise durch Laserbeugungsspektrometrie ermittelt, wobei aus der Laserlichtbeugung die Partikelgröße ermittelt werden kann. Die Laserbeugungsspektrometrie kann dabei beispielsweise mit dem Gerät Helos der Firma Sympatec GmbH, Clausthal-Zellerfeld, Deutschland, gemäß Herstellerangaben durchgeführt werden.

Die Größenverteilung weist vorzugsweise einen $d_{Grieß,Al,10} < 3,0\ \mu m$, einen $d_{Grieß,Al,50} < 5,0\ \mu m$ und einen $d_{Grieß,Al,90} < 8,0\ \mu m$ auf. Bevorzugt umfasst die Größenverteilung einen $d_{Grieß,Al,10} < 0,6\ \mu m$, einen $d_{Grieß,Al,50} < 2,0\ \mu m$ und einen $d_{Grieß,Al,90} < 4,0\ \mu m$.

Der Grieß kann nach dem Verdüsungsschritt durch entsprechende Klassierungsschritte auf die gewünschte schmale Größenverteilung gebracht werden. Die Klassierung kann mit Windsichtern, Zyklonen und anderen bekannten Einrichtungen durchgeführt werden.

Diese feinen und relativ eng geschnittenen Aluminiumgrieße sind besonders gut geeignet, um die erfindungsgemäß zu verwendenden Aluminiumeffektpigmente herzustellen. Als Untergrenze weist die Größenverteilung vorzugsweise folgende Kenndaten auf: $d_{Grieß,Al,10} > 0,15~\mu m$, $d_{Grieß,Al,50} > 0,8~\mu m$ und $d_{Grieß,Al,90} > 2,0~\mu m$. Der verwendete Aluminiumgrieß ist mithin überwiegend kein Aluminiumgrieß in nanometrischen Dimensionen.

Weiter bevorzugt sind Aluminiumgrieße mit einem $d_{Grieß,Al,50}$-Wertebereich von 0,9 bis 3,0 $\mu m$ und noch weiter bevorzugt von 0,95 bis 2,5 $\mu m$.

Diese bevorzugt verwendeten Aluminiumgrieße weisen bevorzugt einen Span ihrer Größenverteilung, der in üblicher Weise als

$$\Delta d_{Grieß,Al} = (d_{Grieß,Al,90} - d_{Grieß,Al,10})/ d_{Grieß,Al,50}$$

definiert ist, von 30 % bis 200 % und weiter bevorzugt von 40 % bis 180 % und ganz besonders bevorzugt von 50 % bis 170 % auf.

Die Verwendung eines derartig feinen Aluminiumgrießes mit enger Größenverteilung ist äußerst vorteilhaft bei der Herstellung der erfindungsgemäß zu verwendenden, durch Vermahlung erhaltenen Aluminiumeffektpigmente (konv.-Al).

Während der Verformungsmahlung werden die Aluminiumgrießpartikel nicht völlig gleichmäßig verformt: dies bedeutet, dass einige Partikel stärker verformt werden, während ein Teil der Grießpartikel erst sehr spät während der Vermahlung verformt werden. Ein Grund hierfür ist auch die Tatsache, dass die Verformungswahrscheinlichkeit eines Partikels von seiner Größe abhängt. So besitzen bereits zu Plättchen vorverformte Partikel eine höhere spezifische Fläche als noch unverformter Grieß und demgemäß eine höhere Wahrscheinlichkeit, weiter verformt zu werden. Die Breite der Größenverteilung des Grießes geht somit nicht nur in die Größenverteilung der daraus geformten Aluminiumplättchen ein, sondern auch in die Verteilung der Dickenverteilung. Für schmale Dickenverteilungen muß daher ein Aluminiumgrieß mit entsprechend geringer Größenvarianz verwendet werden.

Die Reinheit des bei der Verdüsung verwendeten Aluminiums beträgt vorzugsweise 99,0 bis über 99,9 Gew.-%. Der Grieß kann in entsprechend geringen Mengen die üblichen Legierungsbestandteile, wie z.B. Mg, Si, Fe, enthalten.

Der Aluminiumgrieß wird unter Verwendung eines Mahlwerks, vorzugsweise einer Kugelmühle oder einer Rührwerkskugelmühle, in Gegenwart von Lösemittel und Schmierstoffen als Mahlhilfsmittel und von Mahlkörpern, die ein Einzelgewicht von 1,2 bis 13 mg aufweisen, vermahlen. Aufgrund der äußerst schonenden Mahlweise dauert diese Mahlung vergleichsweise lang. Die Mahldauer beträgt bevorzugt 15 bis 100 h, bevorzugt 16 bis 80 h und besonders bevorzugt 17 bis 70 h.

Gemäß einer bevorzugten Weiterbildung der Erfindung weisen die Mahlkörper ein Einzelgewicht von 2,0 bis 12,5 mg und besonders bevorzugt von 5,0 bis 12,0 mg auf. Als Mahlkörper werden vorzugsweise sphärische Körper, weiter bevorzugt Kugeln verwendet.

Bevorzugt sind Kugeln mit sehr glatter Oberfläche, möglichst runder Form und weitgehend einheitlicher Größe. Das Kugelmaterial kann aus Stahl, Glas oder Keramik, wie z.B. Zirkoniumoxid oder Korund sein. Die Temperaturen während des Mahlvorganges liegen vorzugsweise im Bereich von 10°C bis 70 °C. Bevorzugt sind Temperaturen in einem Bereich von 25°C bis 45 °C.

Besonders bevorzugt sind Kugeln aus Glas und einem mittleren Einzelgewicht von 2,0 bis 12,5 mg.

Weiterhin bevorzugt sind Kugeln aus Stahl und einem mittleren Einzelgewicht von 1,2 bis 4,5 mg und besonders bevorzugt einem mittleren Einzelgewicht von 1,4 bis 4,0 mg sowie weiterhin besonders bevorzugt einem mittleren Einzelgewicht von 2,0 bis 3,5 mg.

Die langen Mahldauern führen zu einer Vielzahl von Pigment-Kugel-Stößen. Dadurch wird das Pigment sehr gleichmäßig ausgeformt, wodurch eine sehr glatte Oberfläche und eine sehr enge Dickenverteilung ausgebildet wird.

Die Umdrehungsgeschwindigkeiten der Kugelmühle betragen vorzugsweise 25 % bis 68 %, weiter vorzugsweise 28 % bis 60 % und besonders bevorzugt 30 % bis unter 50 % und weiterhin besonders bevorzugt 35 % bis 45 % der kritischen Drehzahl $n_{krit}$.

Bezogen auf die Vermahlung in einer Kugelmühle ist die kritische Drehzahl $n_{krit}$ ein wichtiger Parameter, der angibt, ab wann die Kugeln durch die Zentrifugalkräfte an die Mühlenwand gepresst werden und praktisch keine Mahlung mehr stattfindet:

$$n_{krit} = \sqrt{\frac{g}{2\pi^2} \cdot \frac{1}{D}}$$

wobei D der Trommeldurchmesser und g die Gravitationskonstante ist.

Niedrige Umdrehungsgeschwindigkeiten begünstigen eine langsame Verformung des Aluminiumgrießes. Um eine langsame Verformung zu bewirken, werden bei dem erfindungsgemäßen Verfahren bevorzugt auch leichte Mahlkugeln verwendet. Mahlkugeln mit einem Einzelgewicht über 13 mg können den Aluminiumgrieß zu stark verformen, was zu vorzeitigem Bruch führen kann.

Im Unterschied zu herkömmlichen Mahlverfahren wird der Aluminiumgrieß bei diesem Verfahren zum überwiegenden Anteil nicht vermahlen bzw. zerkleinert, sondern äußerst schonend über einen längeren Zeitraum verformt.

Die Vermahlung mit sehr leichten Kugeln in Verbindung mit geringen Drehzahlen und einer langen Mahldauer führt zu einer äußerst schonenden Vermahlung, bei der sehr dünne Aluminiumpigmente erhalten werden. Da der eingesetzte Aluminiumgrieß eine sehr enge Korngrößenverteilung aufweist, weisen auch die erfindungsgemäßen Aluminiumeffektpigmente eine sehr einheitliche Dickenverteilung auf.

Die Mahlung kann in einem Lösemittel bei einem Gewichtsverhältnis von Lösemittel zu Aluminiumgrieß von 2,5 bis 10 und bei einem Gewichtsverhältnis der Mahlkugeln zu Aluminiumgrieß von 20 - 110 und mit Schmierstoffen als Mahlhilfsmittel stattfinden.

Als Schmierstoffe können während der Vermahlung eine Vielzahl von Verbindungen verwendet werden.

Hierbei sind die schon seit langer Zeit verwendeten Fettsäuren mit Alkylresten von 10 bis 24 C-Atomen zu nennen. Vorzugsweise werden Stearinsäure, Ölsäure oder Mischungen derselben verwendet.

Dabei führt Stearinsäure als Schmiermittel zu leafing-Pigmenten, Ölsäure hingegen zu non-leafing-Pigmenten.

Leafing-Pigmente sind dadurch gekennzeichnet, daß sie in einem Anwendungsmedium, beispielsweise einem Lack oder einer Druckfarbe aufschwimmen, d.h. sich an der Oberfläche des Anwendungsmediums anordnen. Non-leafing-Pigmente ordnen sich hingegen im Anwendungsmedium an. Den Fettsäuren können zusätzlich beispielsweise langkettige Aminoverbindungen zugesetzt werden.

Die Fettsäuren können tierischen oder auch pflanzlichen Ursprungs sein. Ebenfalls können organische Phosphonsäuren und/oder Phosphorsäureester als Schmiermittel verwendet werden.

Der Durchmesser der Aluminiumeffektpigmente $d_{50,M}$ der erfindungsgemäßen Mischung (d.h. von PVD-Al und konv.-Al) beträgt 5 bis 50 $\mu$m. Dabei wird die Größenverteilung in üblicher Weise durch Lasergranulometrie bestimmt. Bevorzugt beträgt der $d_{50,M}$-Wert der Aluminiumeffektpigmente der Mischung 13 bis 40 $\mu$m und weiter bevorzugt 15 bis 30 $\mu$m.

Bei einer besonders bevorzugten Ausführungsform ist die erfindungsgemäße Mischung von PVD-Aluminium (PVD-Al)- und konventionellen Aluminiumeffektpigmenten (konv.-Al) als solche kein Lack, keine Farbe, kein Kosmetikum oder keine Druckfarbe, d.h. die erfindungsgemäße Mischung ist als solche nicht gebrauchsfertig, um als Lack, Farbe, Druckfarbe oder Kosmetikum verwendet werden zu können.

Die erfindungsgemäße Mischung von Aluminiumeffektpigmenten kann jedoch zur Herstellung von Beschichtungszusammensetzungen, wie Lacken, Farben, Druckfarben oder Kosmetika, verwendet werden. Die erfindungsgemäße Mischung kann dabei in bestehende Lack-, Farb-, Druckfarbensysteme oder Kosmetika eingearbeitet werden.

Bei der oben genannten bevorzugten Ausführungsform ist die erfindungsgemäße Mischung von Aluminiumeffektpigmenten vielmehr ein Vorprodukt, welches einen Lösemittelgehalt von vorzugsweise 53 bis 88 Gew.-% und einen Metalleffektpigmentanteil von vorzugsweise 45 bis 12 Gew.-%, jeweils bezogen auf das Gesamtgewicht der Mischung, aufweist. Der Lösemittelgehalt dieses erfindungsgemäßen Vorprodukts beträgt bevorzugt 60 bis 87 Gew.-% und besonders bevorzugt 65 bis 85 Gew.-%, jeweils bezogen auf das Gesamtgewicht der Mischung. Bei dem Vorprodukt handelt es sich vorzugsweise um eine Paste oder eine Dispersion, bevorzugt hat dieses Vorprodukt jedoch eine pastöse Konsistenz.

Im Einzelfall kann der Lösemittelgehalt vom Lösemittelgehalt der eingesetzten Ausgangsmaterialien und dem Mischungsverhältnis abhängen. Der Lösemittelgehalt der handelsüblichen PVD-Aluminiumeffektpigmente beträgt üblicherweise 95 bis 80 Gew.-%.

Bei den dünnen konventionell vermahlenen Aluminiumeffektpigmenten ist der Lösemittelgehalt höher, wenn die Pigmente dünner werden. Ursache hierfür ist natürlich die mit sinkender Plättchendicke einhergehende steigende spezifische Oberfläche, die somit einen erhöhten Bedarf an organischen Lösemitteln zum Erreichen einer pastenähnlichen Konsistenz nach sich zieht. So liegen die Lösemittelgehalte bei den konventionellen Aluminiumeffektpigmenten üblicherweise zwischen 40 und 70 Gew.-%, bevorzugt zwischen 50 und 65 Gew.-%.

Gemäß einer bevorzugten Variante der Erfindung werden als Aluminiumeffektpigmente (konv.-Al), die durch Vermahlung erhalten sind, solche verwendet, die in der WO 2004/087816 A2, die hiermit unter Bezugnahme mit aufgenommen ist, offenbart sind.

Erfindungsgemäß sind Aluminiumeffektpigmente bevorzugt, die bei einer über Dickenauszählung mit Rasterelektronenmikroskopie (REM) ermittelten Dickenverteilung in der Darstellung als Summenhäufigkeitsverteilung einen $h_{Al,50}$-Wert aus dem Bereich von 15 bis 150 nm aufweisen.

Weiter bevorzugt weisen die Aluminiumeffektpigmente einen $h_{Al,50}$-Wert aus dem Bereich von 15 bis 100 nm, noch weiter bevorzugt von 15 bis 80 nm, besonders bevorzugt von 16 bis 60 nm und weiterhin bevorzugt von 17 bis 55 nm auf.

Als sehr geeignet haben sich Aluminiumeffektpigmente erwiesen, die bei einer über Dickenauszählung mit Rasterelektronenmikroskopie (REM) ermittelten Dickenverteilung in der Darstellung als Summenhäufigkeitsverteilung einen $h_{Al,50}$-Wert aus dem Bereich von 30 bis unter 100 nm aufweisen.

Gemäß einer Variante der Erfindung weisen die verwendeten, durch Vermahlung erhaltenen Aluminiumeffektpigmente (konv.-Al) ein leafing-Verhalten auf, d.h. orientieren sich an oder in der Nähe der Oberfläche des Applikationsmediums, beispielsweise einer Farbe, Druckfarbe oder eines Lackes.

Gemäß einer Variante der Erfindung weisen die verwendeten, durch Vermahlung erhaltenen Aluminiumeffektpigmente (konv.-Al) ein non-leafing-Verhalten auf, d.h. orientieren sich in der Nähe der Substratoberfläche in dem Applikationsmedium, beispielsweise einer Farbe, Druckfarbe oder eines Lackes.

Insbesondere bei Konterapplikationen ist es bevorzugt, dass die erfindungsgemäß zu verwendenden, durch Vermahlung erhaltenen Aluminiumeffektpigmente (konv.-Al) und die PVD-Aluminiumeffektpigmente ein non-leafing-Verhalten zeigen.

Bei einer bevorzugten Ausführungsform weisen sowohl das PVD-Aluminiumeffektpigment wie auch das durch Vermahlung erhaltene Aluminiumeffektpigment (konv.-Al) der Aluminiumeffektpigmentmischung sehr geringe Pigmentdicken auf.

Bei einer bevorzugten Ausführungsform weisen sämtliche Aluminiumeffektpigmente der erfindungsgemäßen Aluminiumeffektpigmentmischung insgesamt einen $h_{M,50}$-Wert von 15 bis 100 nm, bevorzugt von 20 bis 80 nm und besonders bevorzugt von 20 bis 60 nm auf. Diese Werte beziehen sich auf sämtliche Aluminiumeffektpigmente in der Mischung und sind auch unabhängig vom Mischungsverhältnis der beiden Komponenten.

Bei der erfindungsgemäßen Aluminiumeffektpigmentmischung können die PVD-Aluminiumeffektpigmente und die durch Vermahlung erhaltenen Aluminiumeffektpigmente (konv.-Al), ein voneinander verschiedenes leafing- bzw. non-leafing-Verhalten aufweisen. So können die PVD-Aluminiumeffektpigmente ein non-leafing und die durch Vermahlung erhaltenen Aluminiumeffektpigmente (konv.-Al), ein leafing-Verhalten aufweisen oder umgekehrt.

Gemäß einer bevorzugten Ausführungsform weisen die PVD-Aluminiumeffektpigmente und die durch Vermahlung erhaltenen Aluminiumeffektpigmente (konv.-Al), beide ein leafing-Verhalten oder beide ein nonleafing-Verhalten auf. Sehr bevorzugt weisen die PVD-Aluminiumeffektpigmente und die durch Vermahlung erhaltenen Aluminiumeffektpigmente (konv.-Al), beide ein nonleafing-Verhalten auf.

Bei der Herstellung der erfindungsgemäßen Mischung von Aluminiumeffektpigmenten werden die PVD-Aluminiumeffektpigmente und die durch Vermahlung erhaltenen Aluminiumeffektpigmente (konv.-Al) in einem Lösemittel miteinander vermischt. Anstelle eines Lösemittels kann auch ein Lösemittelgemisch verwendet werden. Vorzugsweise liegen sowohl das PVD-Aluminiumeffektpigment als auch das durch Vermahlung erhaltene Aluminiumeffektpigment (konv.-Al) vor dem Vermischen als Paste oder Dispersion vor.

Vorzugsweise liegt die erfindungsgemäße Mischung in staubarmer oder staubfreier Form vor. Der Lösemittelgehalt kann dabei in einem Bereich von 30 bis zu 90 Gew.% liegen, bezogen auf das Gesamtgewicht der Mischung. Vorzugsweise liegt der Lösemittelgehalt in einem Bereich von 40 bis 80 Gew.-%, weiter bevorzugt von 50 bis 70 Gew.-%.

Es hat sich überraschend gezeigt, dass die erfindungsgemäße Mischung von Aluminiumeffektpigmenten die Verwendung eines geringeren Anteils an Lösemittel ermöglicht, als dies bislang bei Dispersion mit PVD-Aluminiumeffektpigment möglich war.

Überraschenderweise weist die erfindungsgemäße Aluminiumeffektpigmentmischung nach Applikation optische Eigenschaften, insbesondere im Hinblick auf Helligkeit, Glanz und Flop, auf, die denen einer applizierten reinen PVD-Aluminiumeffektpigmentpräparation sehr nahe kommt.

Somit erlaubt die erfindungsgemäße Aluminiumeffektpigmentmischung eine signifikante Reduzierung des VOC-Gehaltes (VOC: volatile organic compound(s), flüchtige organische Verbindung(en)) in Alumiumeffektpigmentpräparationen.

Es wird vermutet, dass die in der erfindungsgemäßen Mischung enthaltenen, durch Vermahlung erhaltenen Aluminiumeffektpigmente (konv.-Al) einer normalerweise auftretenden Agglomeration von PVD-Aluminiumpigmenten entgegenwirken. Ohne an eine Theorie gebunden sein zu wollen, wird angenommen, dass die, verglichen zu PVD-Aluminiumpigmenten, leicht unregelmäßige Oberfläche und/oder unregelmäßig ausgebildeten Randbereiche bei den durch Vermahlung erhaltenen Aluminiumeffektpigmenten (konv.-Al) bewirken, dass die PVD-Aluminiumeffektpigmente in der erfindungsgemäßen Mischung nicht vollflächig aufeinander zu liegen kommen und somit nicht agglomerieren können. Die durch Vermahlung erhaltenen Aluminiumeffektpigmente (konv.-Al) wirken mithin als "Abstandshalter", die einem vollflächigen Kontakt von PVD-Aluminiumeffektpigmenten entgegenwirken. Durch die in der erfindungsgemäßen Aluminiumeffektpigmentmischung enthaltenen, durch Vermahlung erhaltenen Aluminiumeffektpigmente (konv.-Al) kommt es vermutlich überwiegend zu punktuellen Kontakten, mithin zu einer deutlichen Verringerung von vollflächigen Kontakten zwischen PVD-Aluminiumpigmenten.

Selbstverständlich können neben den PVD-Aluminiumeffektpigmenten und den durch Vermahlung erhaltenen Aluminiumeffektpigmenten (konv.-Al) auch weitere Effektpigmente, wie z.B. andere Metalleffektpigmente, Perlglanzeffektpigmente, Buntpigmente, Farbpigmente, etc. in der erfindungsgemäßen Mischung enthalten sein.

Gemäß einer Variante der erfindungsgemäßen Mischung enthält die Mischung an Pigmenten ausschließlich PVD-Aluminiumeffektpigmente und durch Vermahlung erhaltene Aluminiumeffektpigmente (konv.-Al).

Die erfindungsgemäßen Formulierungen sind vorzugsweise Lacke, Pulverlacke, Farben, Druckfarben und Kosmetika, vorzugsweise Nagellacke.

Bei den beschichteten Gegenständen handelt es sich vorzugsweise um Karosserien, Fassadenelemente, Fensterrahmen oder Finger- und Fußnägel.

Bei weiteren Ausführungsformen der Erfindung weist die Mischung aus Aluminiumeffektpigmenten zusätzlich Bindemittel auf.

Als Bindemittel können beispielsweise solche auf Basis von Polyurethanen, Polyamide, Polyharnstoffe, Melamin-Bindemittel, Polyimide, Polyacrylate, Polymethacrylate, Epoxid-Bindemittel, Polyether und/oder Polyester dienen. Möglich ist auch die Verwendung von Kombinationen dieser Funktionalitäten wie z.B. Polyester-Polyurethane oder Polyester-Polyether-Polyurethane, Polyester-Polyacrylate oder Polyacrylat-Polyurethane.

Das Verhältnis der Gewichtsanteile von Aluminiumeffektpigmenten zu Bindemittel beträgt 8:1 bis 1:15, bevorzugt 6:1 bis 1:10 und besonders bevorzugt 1:2 bis 1:5.

Hierbei sind hohe Aluminiumeffektpigment/Bindemittel-Verhältnisse bevorzugt auf ein Halbfabrikat zu beziehen. So können erfindungsgemäße Halbfabrikate mit pastenähnlicher Konsistenz ein Aluminiumeffektpigment/Bindemittel-Verhältnis von 8:1 bis 1:2, bevorzugt 6:1 bis 1:1 (Gewichtsanteile) aufweisen.

PVD-Aluminiumpigmente müssen in Lacken und Druckfarben stets mit einem sehr geringen Anteil an Bindemittel (beispielsweise Harz) formuliert werden. Der Bindemittelanteil ist wesentlich geringer als in entsprechenden Formulierungen mit konventionellen Aluminiumeffektpigmenten. Ein höherer Bindemittelanteil scheint das Orientierungsverhalten der PVD-Pigmente zu stören und somit werden die vorteilhaften optischen Eigenschaften dieser Pigmente wie der ausgeprägte Glanz und sehr gute Helligkeitsflop vermindert.

Derartige Formulierungen haben jedoch den Nachteil, dass ihre mechanische Beständigkeit, beispielsweise die Abriebbeständigkeit, aufgrund des geringen Bindemittelgehaltes herabgesetzt ist.

Ein weiterer Vorteil der erfindungsgemäßen Mischungen besteht darin, dass man mit bindemittelreicheren Formulierungen als die üblichen, für PVD-Aluminiumeffektpigmente entwickelten Systeme, optische Eigenschaften erhält, die praktisch gleich derjenigen, mit PVD-Pigmenten pigmentierten Systeme, sind. Daher kann man mittels der erfindungsgemäßen Mischungen zu einem entsprechend günstigeren Preis mechanisch beständigere Formulierungen anbieten, die optisch vergleichbar sind zu PVD-Aluminiumeffektpigmentformulierungen.

Weiterhin hat sich herausgestellt, dass die erfindungsgemäßen Mischungen in Lackanwendungen wesentlich reproduzierbarer bei verschiedenen Schichtdicken der Beschichtung zu applizieren sind im Vergleich zu Lackformulierungen, die nur PVD-Aluminiumeffektpigmente enthalten. Man erhält schlussendlich Lackformulierungen, die optisch nur geringfügige Einbußen im Vergleich zu PVD-Aluminiumeffektpigmenten und dafür erhebliche anwendungstechnische Vorteile aufweisen.

Bei weiter bevorzugten Ausführungsformen enthält die erfindungsgemäße Mischung aus Aluminiumeffektpigmenten zusätzlich Additive. Hierbei sind die Additive bevorzugt der Gruppe bestehend aus Dispergieradditive, Antiabsetzadditive, Korrosionsschutzadditive und deren Mischungen, entnommen. Derartige Additive sind dem Fachmann bekannt.

Bei weiteren bevorzugten Ausführungsformen werden die erfindungsgemäßen Aluminiumeffektpigmentmischungen in wässrigen Anwendungssystemen eingesetzt. Daher sind die Aluminiumeffektpigmente der erfindungsgemäßen Mischung in diesen Fällen mit einer korrosionsinhibierenden Beschichtung versehen.

Die korrosionsinhibierende Beschichtung ist aus der Gruppe bestehend aus Siliciumoxiden, Siliciumhydroxiden, Ceroxid, Boroxid, Chromatierungsschichten, (EP 0 259 592 B1), Aluminiumoxiden, -hydroxyden oder -oxidhydraten (z.B. DE 195 20 312 A1), vernetzten Polymeren (z.B. DE 4030727 A1, EP 1 837 380 A1 und EP 1 655 349 A1), anorganisch/organischen Mischschichten (z.B. EP 1 812 519 A2) und deren Mischungen und/oder deren Kombinationen, entnommen.

Es können jedoch auch andere bekannte Stabilisierungsbeschichtungen wie beispielsweise Molybdate oder Vanadiumverbindungen, alleine oder in Verbindung mit den vorher genannten Methoden, verwendet werden. Ebenso sind alle in der EP 0 826 745 A1 genannten Beschichtungen möglich.

Bevorzugt sind als korrosionsinhibierende Beschichtung Siliciumoxide, Siliciumhydroxide, Siliciumoxidhydrate oder Chromatierungsschichten und besonders bevorzugt aufgrund ihrer sehr guten Wirkung und ökologischen Verträglichkeit eine korrosionsinhibierende Beschichtung aus Siliciumoxiden, Siliciumhydroxiden und/oder Siliciumoxidhydraten.

Bei weiter bevorzugten Ausführungsformen weisen die Aluminiumeffektpigmente PVD-Al keine weiteren farbigen und/oder eine Interferenzfarbe erzeugende Schicht oder Schichten auf.

Bei noch weiter bevorzugten Ausführungsformen weisen die Aluminiumeffektpigmente konv.-Al sowie die PVD-Al Aluminiumeffektpigmente keine weiteren farbigen und/oder eine Interferenzfarbe erzeugende Schicht oder Schichten auf. Bevorzugt sind mithin Mischungen der Aluminiumeffektpigmente, die einen silberfarbenen, hochglänzenden Eindruck erzeugen entsprechend der Eigenfarbe der Aluminiumeffektpigmente.

Ein Verfahren zur Bereitstellung der erfindungsgemäßen Mischung von Aluminiumeffektpigmenten umfasst folgenden Schritt: Vermischen von PVD-Aluminiumeffektpigmenten und Aluminiumeffektpigmenten konv.-Al, die durch Vermahlung hergestellt sind in Gegenwart von Lösemittel oder einem Lösemittelgemisch.

Hierbei ist das Verfahren bevorzugt zur Herstellung eines Vorprodukts bzw. eines Halbfabrikats geeignet.

Will man die erfindungsgemäße Mischung aus Aluminiumeffektpigmenten jedoch in die fertige Formulierung einarbeiten, so kann man auch die beiden Aluminiumeffektpigmentkomponenten nacheinander in die Formulierung einarbeiten. Hierdurch ist unter Umständen eine bessere Farbtonabtönung gegeben. Der Aufwand ist jedoch geringer, wenn die erfindungsgemäße Mischung in Form eines Vorprodukts in die Formulierung eingearbeitet wird.

Die erfindungsgemäßen Mischungen von Aluminiumeffektpigmenten findet Verwendung in Coatings, Lacken, Druckfarben, Kunststoffen oder kosmetischen Formulierungen.

Bei kosmetischen Formulierungen sind Nagellacke besonders bevorzugt.

Gegenstand der vorliegenden Erfindung sind weiterhin Beschichtungszusammensetzungen, die eine Mischung von Aluminiumeffektpigmenten nach einem der Ansprüche 1 bis 11 enthält. Bei den Beschichtungszusammensetzungen handelt es sich vorzugsweise um Coatings, Lacke, Druckfarben, Kunststoffen oder kosmetischen Formulierungen. Der Gegenstand der vorliegenden Erfindung weist eine Beschichtungszusammensetzung nach Anspruch 14 oder eine Mischung von Aluminiumeffektpigmenten nach einem der Ansprüche 1 bis 11 auf oder enthält diese Beschichtungszusammensetzung.

Die folgenden Beispiele erläutern die Erfindung näher, ohne sie jedoch in ihrem Schutzumfang zu beschränken.

**Vergleichsbeispiel 1**:

Hier wurde ein neues dünnes Aluminiumeffektpigment mit einer sehr dünnen Dickenverteilung hergestellt. Dabei wurde folgendermaßen verfahren:

a) Verdüsung:

In einem Induktionstiegelofen (Fa. Induga, Ofeninhalt ca. 2,5 to) wurden Aluminiumbarren kontinuierlich eingebracht und aufgeschmolzen. Im sogenannten Vorherd lag die Aluminiumschmelze bei einer Temperatur von etwa 720 °C flüssig vor. Mehrere Düsen tauchten in die Schmelze ein und verdüsten die Aluminiumschmelze vertikal nach oben. Das Verdüsungsgas wurde in Kompressoren (Fa. Kaeser) bis auf 20 bar verdichtet und in Gaserhitzern bis auf etwa 700 °C erhitzt. Der entstandene Aluminiumgrieß erstarrte und erkaltete im Fluge. Der Induktionsofen war in eine geschlossene Anlage integriert. Die Verdüsung erfolgte unter Inertgas (Stickstoff). Die Abscheidung des Aluminiumgrießes erfolgte zuerst in einem Zyklon, wobei der dort abgeschiedene pulverförmige Aluminiumgrieß einen $d_{50}$ von 14 -17 $\mu$m aufwies. Zur weiteren Abscheidung diente in Folge ein Multizyklon, wobei der in diesem abgeschiedene pulverförmige Aluminiumgrieß einen $d_{50}$ von 2,3 - 2,8 $\mu$m aufwies. Die Gas-Feststoff-Trennung erfolgte in einem Filter (Fa. Alpine) mit Metallelementen. Hierbei wurde als feinste Fraktion ein Aluminiumgrieß mit einem $d_{Grieß,Al,10}$ von 0,7 $\mu$m, einem $d_{Grieß,Al,50}$ von 1,9 $\mu$m und einem $d_{Grieß,Al,90}$ von 3,8 $\mu$m gewonnen.

b) Vermahlung:

In eine Topfmühle (Länge: 32 cm, Breite: 19 cm) wurden 4 kg Glaskugeln (Durchmesser: 2 mm), 75 g des feinsten Aluminiumgrießes aus vorstehendem Schritt a), 200 g Testbenzin und 3,75 g Ölsäure gegeben. Anschließend wurde 15 h lang bei 58 U/min vermahlen. Das Produkt wurde durch Spülen mit Testbenzin von den Mahlkugeln getrennt und anschließend in einer Nasssiebung auf einem 25 $\mu$m-Sieb durchgesiebt. Das Feinkorn wurde über einer Nutsche weitgehend von Testbenzin befreit und anschließend mit Testbenzin in einem Labormischer angepastet (ca. 30 Gew.-% Feststoffanteil).

**Vergleichsbeispiel 2:**

Kommerziell erhältliche PVD-Pigmentdispersion Metalure L 55700 (Fa. Eckart GmbH). PVD-Aluminiumeffektpigmentdispersion mit einem Metallpigmentanteil von 10 Gew.-%.

Die Größenverteilungen der Pigmente der Vergleichsbeispiele wurden in üblicher Weise mit Hilfe der Lasergranulometrie bestimmt (Cilas 1064, Fa. Cilas, Frankreich).

Die Dickenverteilungen der Vergleichsbeispiele wurden mittels REM nach der in der WO 2004/087816 A2 angegebenen Methode vermessen. Es wurden stets 97 Pigmentteilchen gemessen.

Die Ergebnisse sind in Tab. 1 dargestellt.

Tab. 1: Physikalische Charakterisierung der Aluminiumeffektpigmente der Vergleichsbeispiele

| Probe | Größenverteilung | | | Dickenverteilung | | | Span Dicken | Formfaktor |
|---|---|---|---|---|---|---|---|---|
| | $d_{10}[\mu m]$ | $d_{50}[\mu m]$ | $d_{90}[\mu m]$ | $h_{10}$ [nm] | $h_{50}$ [nm] | $h_{90}$ [nm] | | |
| Vergleichsbeispiel 1 | 7,1 | 13,0 | 20,0 | 35 | 54 | 70,2 | 0,65 | 241 |
| Vergleichsbeispiel 2 | 4,8 | 10,2 | 18,5 | 28 | 33 | 38 | 0,30 | 309 |

**Erfindungsgemäße Beispiele 1 - 5:**

Mischungen der Vergleichsbeispiele 1 (konv.-Al) und Vergleichsbeispiel 2 (PVD-Al). Hierzu wurden zunächst die Metalleffektpigmentpasten der Vergleichsbeispiele 1 und 2 miteinander vermischt. Anschließend wurden diese Mischpasten in ein Lacksystem basierend auf einem Nitrocelluloselack eingearbeitet. Als Lösemittel wurde ein Gemisch aus Isopropylacetat, Isopropanol und Methoxypropanol verwendet und der Lackformulierung geringe Zusätze eines Fixiermittels zur Erniedrigung des Dampfdrucks (0,4 Gew.- %) zugesetzt. Die genauen Mischungsverhältnisse, Einwaagen der Pasten und daraus resultierende Lösemittelgehalte der Pasten sind in Tabelle 2 angegeben.

Die Lacke wurden mittels einer 36 $\mu$m Rakel auf Kontrastkartons aufgezogen und anschließend bei 140 °C für 30 s eingebrannt.

Die Rakelabzüge wurden durch eine Glanzmessung bei 60° in Anlehnung an die DIN 67 530 (Gerät: micro-TRI-gloss von Byk-Gardner, D-82538 Geretsried, Deutschland) charakterisiert. Kalibriert wurde hier mittels Dunkelkalibrierung sowie einer schwarzen Spiegelglasplatte mit Werten von 92 für 60°.

Die Ergebnisse dieser Messungen sind ebenfalls in Tab. 2 angegeben.

Tabelle 2:

| Probe | Anteil Konv.-Al in Gew.-% | Anteil PVD Al in Gew.-% | Einwaage Paste Konv.-Al in g | Einwaage Paste PVD-Al in g | Lösemittelgehalt Metalleffektpigment -paste bzw. -dispersion in Gew.-% | Glanz 60° | Relativer Glanzanstieg bezogen auf reines konv Al |
|---|---|---|---|---|---|---|---|
| Vergleichs-beispiel 2 | 0 | 100 | 0,0 | 3,0 | 90% | 212 | 100 % |
| Beispiel 1 | 20 | 80 | 0,43 | 2,57 | 87,2 % | 200 | 81 % |
| Beispiel 2 | 40 | 60 | 1,20 | 1,80 | 85% | 190 | 66% |
| Beispiel 3 | 50 | 50 | 0,75 | 2,25 | 82% | 184 | 56% |
| Beispiel 4 | 60 | 40 | 1,00 | 2,00 | 83,3 % | 173 | 39% |
| Beispiel 5 | 80 | 20 | 1,71 | 1,29 | 78,9 % | 172 | 37,5 % |
| Vergleichs-beispiel 1 | 100 | 0 | 3,00 | 0,0 | 70% | 148 | 0 % |

Der Tabelle 2 kann entnommen werden, dass der Lösemittelgehalt der erfindungsmäßen Aluminiumeffektpigmentmischungen geringer ist im Vergleich zu PVD-Aluminium. Die Glanzwerte der Mischungen sind zwar erwartungsgemäß auch geringer als jene von PVD-Aluminium, weisen jedoch einen signifikanten Anstieg im Vergleich zu dem konventionellen Aluminiumpigment auf. In der letzten Spalte ist der relative Glanzanstieg berechnet nach folgender Formel berechnet:

$$\Delta Glanz = 100 \times (Glanzwert - 148)/(212 - 148)$$

Er ist überraschenderweise praktisch immer höher als der prozentuale Anteil der PVD-Pigmente in der Aluminiumeffektpigmentmischung. So beträgt bei einem PVD-Pigmentanteil von nur 20 Gew.-% der relative Glanzanstieg bereits fast 40 %.

**Patentansprüche**

1. Mischung von Aluminiumeffektpigmenten,
   **dadurch gekennzeichnet,**
   **dass** die Mischung

   a) PVD-Aluminiumeffektpigmente (PVD-Al), die bei einer über Dickenauszählung mit Rasterelektronenmikroskopie (REM) ermittelten Dickenverteilung in der Darstellung als Summenhäufigkeitsverteilung einen $h_{50,PVD}$-Wert aus einem Bereich von 10 nm bis 70 nm aufweisen,
   b) Aluminiumeffektpigmente (konv.-Al), die durch Vermahlungsverfahren hergestellt sind und bei einer über Dickenauszählung mit Rasterelektronenmikroskopie (REM) ermittelten Dickenverteilung in der Darstellung als Summenhäufigkeitsverteilung einen $h_{50,konv.}$-Wert aus einem Bereich von 15 nm bis 100 nm aufweisen
   c) Lösemittel oder Lösemittelgemisch

   umfasst,
   mit der Maßgabe, dass das Gewichtsverhältnis von PVD-Al zu konv.-Al 99 : 1 bis 1 : 99 ist und der Gehalt an Lösemittel mindestens 30 Gew.-%, bezogen auf das Gesamtgewicht der Mischung, beträgt.

2. Mischung von Aluminiumeffektpigmenten nach Anspruch 1,
   **dadurch gekennzeichnet,**
   **dass** das Gewichtsverhältnis von PVD-Al zu konv.-Al 95 : 5 bis 5 : 95 ist.

3. Mischung von Aluminiumeffektpigmenten nach einem der vorstehenden Ansprüche,
   **dadurch gekennzeichnet,**
   **dass** die durch Vermahlungsverfahren hergestellten Aluminiumeffektpigmente einen $h_{50,konv}$-Wert von 20 nm bis 75 nm aufweisen.

4. Mischung von Aluminiumeffektpigmenten nach einem der vorstehenden Ansprüche,
   **dadurch gekennzeichnet,**
   **dass** die durch Vermahlungsverfahren hergestellten Aluminiumeffektpigmente bei einer über Dickenauszählung mit Rasterelektronenmikroskopie ermittelten Dickenverteilung in der Darstellung als Summenhäufigkeitsverteilung einen $h_{90,konv}$-Wert von 30 nm bis 110 nm aufweisen.

5. Mischung von Aluminiumeffektpigmenten nach einem der vorstehenden Ansprüche,
   **dadurch gekennzeichnet,**
   **dass** die durch Vermahlungsverfahren hergestellten Aluminiumeffektpigmente eine über Dickenauszählung mit Rasterelektronenmikroskopie ermittelte relative Breite der Dickenverteilung Δh, welche anhand der entsprechenden Summenhäufigkeitsverteilung der relativen Häufigkeiten nach der Formel $\Delta h = 100 \times \dfrac{h_{90} - h_{10}}{h_{50}}$ wird, von 20 % bis 140 %, aufweisen.

6. Mischung von Aluminiumeffektpigmenten nach Anspruch 5,
   **dadurch gekennzeichnet,**
   **dass** die durch Vermahlungsverfahren hergestellten Aluminiumeffektpigmente eine relative Breite der Dickenverteilung Δh von 30 % bis unter 70 % aufweisen.

7. Mischung von Aluminiumeffektpigmenten nach einem der vorstehenden Ansprüche,
   **dadurch gekennzeichnet,**
   **dass** die Aluminiumeffektpigmente der Mischung insgesamt eine relative Breite der Dickenverteilung Δh von 20 % bis unter 70 % aufweisen.

8. Mischung von Aluminiumeffektpigmenten nach einem der vorstehenden Ansprüche,
   **dadurch gekennzeichnet,**
   **dass** die Aluminiumeffektpigmente der Mischung insgesamt eine mittlere Teilchengröße $d_{50,M}$ von 13 bis 40 $\mu$m aufweisen.

**9.** Mischung von Aluminiumeffektpigmenten nach einem der vorstehenden Ansprüche,
**dadurch gekennzeichnet,**
**dass** die Mischung aus Aluminiumeffektpigmenten einen Lösemittelgehalt von 53 bis 88 Gew.-% und einen Aluminiumeffektpigmentanteil von 45 bis 12 Gew.-%, jeweils bezogen auf das Gesamtgewicht der Mischung, aufweist.

**10.** Mischung von Aluminiumeffektpigmenten nach einem der vorstehenden Ansprüche,
**dadurch gekennzeichnet,**
**dass** die Mischung aus Aluminiumeffektpigmenten zusätzlich Bindemittel aufweist.

**11.** Mischung von Aluminiumeffektpigmenten nach Anspruch 10,
**dadurch gekennzeichnet,**
**dass** das Gewichtsverhältnis von Aluminiumeffektpigmenten zu Bindemittel in einem Bereich von 8:1 bis 1:15 liegt.

**12.** Verfahren zur Herstellung einer Mischung von Aluminiumeffektpigmenten nach einem der vorstehenden Ansprüche,
**dadurch gekennzeichnet,**
**dass** das Verfahren folgenden Schritt umfaßt:

Vermischen von PVD-Aluminiumeffektpigmenten und
Aluminiumeffektpigmenten Al,konv, die durch Vermahlung hergestellt sind in Gegenwart von Lösemittel oder einem Lösemittelgemisch.

**13.** Verwendung der Mischung von Aluminiumeffektpigmenten nach einem der Ansprüche 1 bis 11 in Coatings, Lacken, Druckfarben, Kunststoffen oder kosmetischen Formulierungen.

**14.** Beschichtungszusammensetzung,
**dadurch gekennzeichnet,**
**dass** die Beschichtungszusammensetzung eine Mischung von Aluminiumeffektpigmenten nach einem der Ansprüche 1 bis 11 enthält.

**15.** Beschichteter Gegenstand,
**dadurch gekennzeichnet,**
**dass** der Gegenstand eine Beschichtungszusammensetzung nach Anspruch 14 oder eine Mischung von Aluminiumeffektpigmenten nach einem der Ansprüche 1 bis 11 aufweist oder enthält.

**Claims**

**1.** Mixture of aluminium effect pigments,
**characterised in that**
the mixture comprises

a) PVD aluminium effect pigments (PVD Al) which, having a thickness distribution determined on the basis of thickness counting by means of scanning electron microscopy (SEM) expressed as a cumulative frequency distribution, have an $h_{50.PVD}$ value in a range of from 10 nm to 70 nm,
b) aluminium effect pigments which have been produced by milling processes(conv. Al) and which, having a thickness distribution determined on the basis of thickness counting by means of scanning electron microscopy (SEM) expressed as a cumulative frequency distribution, have an $h_{50.conv.}$ value in a range of from 15 nm to 100 nm,
c) a solvent or a solvent mixture,

with the proviso that the weight ratio of PVD Al to conv. Al is 99:1 to 1:99 and the solvent content is at least 30% by weight based on the total weight of the mixture.

**2.** Mixture of aluminium effect pigments as claimed in claim 1,
**characterised in that**
the weight ratio of PVD Al to conv. Al is 95:5 to 5:95.

**3.** Mixture of aluminium effect pigments as claimed in one of the preceding claims,

**characterised in that**
the aluminium effect pigments produced by milling processes have an $h_{50.conv.}$ value of 20 nm to 75 nm.

4. Mixture of aluminium effect pigments as claimed in one of the preceding claims,
**characterised in that**
the aluminium effect pigments produced by milling processes, having a thickness distribution determined on the basis of thickness counting by means of scanning electron microscopy expressed as a cumulative frequency distribution, have an $h_{50.conv.}$ value in a range of 30 nm to 110 nm.

5. Mixture of aluminium effect pigments as claimed in one of the preceding claims,
**characterised in that**
the aluminium effect pigments produced by milling processes have a relative span of the thickness distribution Δhof 20% to 140%, determined on the basis of thickness counting by scanning electron microscopy and calculated on the basis of the corresponding cumulative frequency distribution of the relative frequencies in accordance with the

formula $\Delta h = 100 \times \dfrac{h_{90} - h_{10}}{h_{50}}$ .

6. Mixture of aluminium effect pigments as claimed in claim 5,
**characterised in that**
the aluminium effect pigments produced by milling processes have a relative span of the thickness distribution Δh of 30 % to less than 70%.

7. Mixture of aluminium effect pigments as claimed in one of the preceding claims,
**characterised in that**
the aluminium effect pigments of the mixture in total have a relative span of the thickness distribution Δh of 20 % to less than 70 %.

8. Mixture of aluminium effect pigments as claimed in one of the preceding claims,
**characterised in that**
the aluminium effect pigments of the mixture in total have an average particle size $d_{50.M}$ of 13 to 40 $\mu$m.

9. Mixture of aluminium effect pigments as claimed in one of the preceding claims,
**characterised in that**
the mixture of aluminium effect pigments has a solvent content of 53 to 88 % by weight and a proportion of aluminium effect pigments of 45 to 12 % by weight, based on the total weight of the mixture in each case.

10. Mixture of aluminium effect pigments as claimed in one of the preceding claims,
**characterised in that**
the mixture of aluminium effect pigments further comprises binding agent.

11. Mixture of aluminium effect pigments as claimed in claim 10,
**characterised in that**
the weight ratio of aluminium effect pigments to binding agent is within a range of 8:1 to 1:15.

12. Method of producing a mixture of aluminium effect pigments as claimed in one of the preceding claims,
**characterised in that**
the method comprises the following steps:

mixing PVD aluminium effect pigments and Al.conv. aluminium effect pigments produced by milling processes in the presence of a solvent or a solvent mixture.

13. Use of the mixture of aluminium effect pigments as claimed in one of claims 1 to 11 in coatings, paints, printing inks, plastics or cosmetic formulations.

14. Coating composition,
**characterised in that**

the coating composition contains a mixture of aluminium effect pigments as claimed in one of claims 1 to 11.

15. Coated object,
**characterised in that**
the object comprises or contains a coating composition as claimed in claim 14 or a mixture of aluminium effect pigments as claimed in one of claims 1 to 11.


**Revendications**

1. Mélange de pigments d'aluminium à effets, **caractérisé en ce que** le mélange comprend

a) des pigments d'aluminium à effets métallisé sous vide (PVD-AI), qui pour une distribution des épaisseurs, déterminée par le décompte des épaisseurs au microscope électronique à balayage (MEB), présentent dans une représentation en tant que distribution des fréquences cumulées, une valeur $h_{50,PVD}$ comprise dans la plage de 10 nm à 70 nm,
b) des pigments d'aluminium à effets (konv.AI), qui sont fabriqués par des procédés par broyage et qui, pour une distribution des épaisseurs, déterminée par décompte des épaisseurs à l'aide d'un microscope électronique à balayage (MEB), présentent dans une représentation en tant que distribution des fréquences cumulées une valeur $h_{50,konv}$ comprise dans la plage de 15 nm à 100 nm,
c) un solvant ou des mélanges de solvants,
à la condition que le rapport en poids du PVD-AI au knov.AI soit de 99:1 à 1:99 et que la teneur en solvant soit d'au moins 30 % en poids par rapport au poids total du mélange.

2. Mélange de pigments d'aluminium à effets selon la revendication 1, **caractérisé en ce que** le rapport en poids du PVD-AI au konv.-AI est de 95:5 à 5:95.

3. Mélange de pigments d'aluminium à effets selon l'une des revendications précédentes, **caractérisé en ce que** les pigments d'aluminium à effets fabriqués par le procédé par broyage présentent une valeur $h_{50,konv}$ de 20 nm à 75 nm.

4. Mélange de pigments d'aluminium à effets selon l'une des revendications précédentes, **caractérisé en ce que** les pigments d'aluminium à effets fabriqués par le procédé par broyage présentent pour une distribution des épaisseurs déterminée par un décompte des épaisseurs au microscope électronique à balayage, dans une représentation en tant que distribution des fréquences cumulées, une valeur $h_{90,knov}$ de 30 nm à 110 nm.

5. Mélange de pigments d'aluminium à effets selon l'une des revendications précédentes, **caractérisé en ce que** les pigments d'aluminium à effets fabriqués par le procédé par broyage présentent une largeur relative, déterminée par un décompte des épaisseurs au microscope électronique à balayage, de la distribution des épaisseurs $\Delta h$, calculée à l'aide de la distribution correspondante des fréquences cumulées des fréquences relatives par la formule

$$\Delta h = 100 \times \frac{h_{90} - h_{10}}{h_{50}},$$

de 20 à 140%.

6. Mélange de pigments d'aluminium à effets selon la revendication 5, **caractérisé en ce que** les pigments d'aluminium à effets fabriqués par le procédé par broyage présentent une largeur relative de la distribution des épaisseurs $\Delta h$ de 30 % à moins de 70 %.

7. Mélange de pigments d'aluminium à effets selon l'une des revendications précédentes, **caractérisé en ce que** les pigments d'aluminium à effets du mélange présentent globalement une largeur relative de la distribution des épaisseurs $\Delta h$ de 20 % à moins de 70 %.

8. Mélange de pigments d'aluminium à effets selon l'une des revendications précédentes, **caractérisé en ce que** les pigments d'aluminium à effets du mélange présentent globalement une granulométrie moyenne $d_{50,M}$ de 13 à 40 $\mu$m.

9. Mélange de pigments d'aluminium à effets selon l'une des revendications précédentes, **caractérisé en ce que** le mélange de pigments d'aluminium à effets présente une teneur en solvant de 53 à 88 % en poids et une teneur en pigments d'aluminium à effets de 45 à 12 % en poids, chacune par rapport au poids total du mélange.

10. Mélange de pigments d'aluminium à effets selon l'une des revendications précédentes, **caractérisé en ce que** le mélange de pigments d'aluminium à effets comprend en outre des liants.

11. Mélange de pigments d'aluminium à effets selon la revendication 10, **caractérisé en ce que** le rapport en poids des pigments d'aluminium à effets aux liants est compris dans la plage de 8:1 à 1:15.

12. Procédé de fabrication d'un mélange de pigments d'aluminium à effets selon l'une des revendications précédentes, **caractérisé en ce que** le procédé comprend les étapes suivantes : mélange des pigments à effets d'aluminium métallisé sous vide et de pigments d'aluminium à effets Al.konv, qui sont fabriqués par broyage, en présence d'un solvant ou d'un mélange de solvants.

13. Utilisation du mélange de pigments d'aluminium à effets selon l'une des revendications 1 à 11 dans les peintures, les vernis, les encres d'imprimerie, les matières plastiques ou les formulations cosmétiques.

14. Composition de revêtement, **caractérisée en ce que** la composition de revêtement contient un mélange de pigments d'aluminium à effets selon l'une des revendications 1 à 11.

15. Objet revêtu, **caractérisé en ce que** l'objet comprend ou contient une composition de revêtement selon la revendication 14 ou un mélange de pigments d'aluminium à effets selon l'une des revendications 1 à 11.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20030178734 A1
- EP 1621586 A1
- WO 2004087816 A2
- WO 2005118722 A1
- WO 2005111152 A1
- EP 0259592 B1

- DE 19520312 A1
- DE 4030727 A1
- EP 1837380 A1
- EP 1655349 A1
- EP 1812519 A2
- EP 0826745 A1